# FASCICULE DE BREVET EUROPEEN

(11) **EP 1 503 052 B1**
(45) Date de publication et mention de la délivrance du brevet: **13.09.2006**
(21) Numéro de dépôt: 04291812.8
(22) Date de dépôt: 15.07.2004
(51) Int. Cl.: F01N 3/023, F01N 3/029, F01N 3/08, F01N 9/00

(54) **Procédé et dispositif de dépollution des gaz d'échappement d'un moteur à combustion interne**
Verfahren und Vorrichtung zur Reinigung von Abgasen einer Brennkraftmaschine
Method and device for purification of exhaust gas from an internal combustion engine

(30) Priorité: 31.07.2003 FR 0309469
(43) Date de publication de la demande: 02.02.2005
(73) Titulaire: Peugeot Citroën Automobiles S.A., 78140 Vélizy Villacoublay (FR)
(72) Inventeur: Noirot, Rémi, 58600 Garchizy (FR)
(74) Mandataire: Neyret, Daniel Jean Marie

(56) Documents cités:
- EP-A- 0 341 832
- EP-A- 0 590 814
- EP-A- 1 148 227
- EP-A- 1 157 733
- FR-A- 2 771 449
- US-B1- 6 200 358

## Description

L'invention concerne les moteurs à explosion, et plus précisément les procédés et dispositifs visant à réduire les émissions polluantes de ces moteurs, en particulier des moteurs diesel.

Les émissions polluantes des moteurs à explosion, en particulier des moteurs diesel, se répartissent principalement en quatre catégories dont les quantités rejetées à l'atmosphère doivent être contenues dans des limites fixées par la réglementation :
- le CO ;
- les hydrocarbures ;
- les oxydes d'azote NOₓ ;
- les particules solides.

Il est connu à cet effet d'équiper les lignes d'échappement des véhicules de filtres à particules. Leur fonction première est de piéger les particules solides. Périodiquement, il est nécessaire de réaliser une combustion des particules de manière à régénérer le filtre pour lui faire retrouver sa capacité de filtration nominale.

On rappelle que les particules (suies) sont constituées, lorsqu'elles se déposent sur le filtre, par :
- un agrégat de particules de carbone représentant 50 à 95% en masse des suies ;
- des éléments métalliques, minéraux ou oxydes métalliques, issus de la combustion du gazole et de ses éventuels additifs, de l'huile de lubrification ou de l'usure des parties métalliques internes au moteur, qui représentent quelques % en masse des suies ;
- des sulfates ou nitrates, le plus souvent présents à l'état ionique, issus de la combustion des hydrocarbures soufrés contenus dans le carburant et de l'oxydation de NO en NO₂ puis de la combinaison du NO₂ avec les oxydes contenus dans les suies, par exemple : NO₂ + BaO → BaNO₃, ou K₂O + 2NO₂ → 2KNO₃ ;
- des liquides (hydrocarbures, eau...) adsorbés dans la structure interne des agrégats de carbone en plus ou moins grande quantité, représentant jusqu'à environ 50% en masse des suies.

Pour éliminer ces suies lors des opérations de régénération du filtre par combustion, plusieurs procédés sont connus.

Une première solution consiste à échauffer le filtre jusqu'à une température suffisante et pendant une durée suffisante. Ce faisant, on vaporise les phases liquides adsorbées et on assèche la structure interne des suies. Pour obtenir la vaporisation de tous les hydrocarbures imbrûlés, une température supérieure à 500°C est nécessaire. D'autre part, cette élévation de température permet, vers 550°C et au-delà, de déclencher la réaction du carbone des suies avec l'oxygène adsorbé à sa surface. Des additifs ajoutés au gazole, tels que le cérium, permettent de favoriser cette combustion.

Une deuxième solution consiste à brûler les hydrocarbures adsorbés sur les suies, afin que la chaleur dégagée lors de cette combustion permette de créer les conditions favorables à la combustion du carbone dont on vient de parler. Pour ce faire, on peut créer un point chaud au sein du lit de suies, par exemple au moyen d'une bougie de préchauffage placée en face avant du filtre, ce qui complique la conception de la ligne d'échappement. Une autre solution consiste à catalyser cette combustion des hydrocarbures à basse température, au moyen généralement de métaux alcalins ou alcalino-terreux. Ces catalyseurs peuvent être ajoutés au carburant ou imprégner le filtre à particules. Pour être applicable, ce principe nécessite cependant que le moteur émette une quantité relativement importante d'hydrocarbures imbrûlés. Ce n'est pas le cas des moteurs diesel les plus performants. De plus, le besoin de réduire les émissions de CO impose l'utilisation de catalyseurs d'oxydation très efficaces en amont du filtre. Les suies accumulées dans le filtre sont donc généralement très sèches et peu chargées en hydrocarbures.

Une troisième solution consiste à utiliser le NO₂ présent dans les gaz d'échappement pour promouvoir l'oxydation des suies à basse température, soit à partir de 300°C. Cependant, la cinétique de cette réaction est lente. En effet, la création par le NO₂ d'oxygène adsorbé à la surface du carbone, qui constitue la première étape de la réaction, est limitée par la diffusion du NO₂ vers le carbone. Celle-ci est gênée par la présence d'autres espèces adsorbées dans la structure interne des suies, telles que l'eau, les hydrocarbures, les sulfates.... D'autre part la réactivité des suies en présence de NO₂ est sensible à la pression partielle du NO₂. Il faudrait pouvoir disposer de 2% de NO₂ dans les gaz d'échappement pour brûler les suies à 300°C de façon aussi rapide qu'à 550°C sous 10% d'oxygène. Or les moteurs diesel émettent peu de NOₓ, du fait notamment de la mise en place de systèmes de recirculation des gaz d'échappement (dits systèmes EGR) qui permettent de réduire les quantités émises comme l'imposent les normes anti-pollution. Les teneurs en NOₓ accessibles dans les gaz d'échappement sont généralement comprises entre 0 et 1000ppm.

La réactivité des suies vis-à-vis du NO₂ peut être sensiblement améliorée lorsque de l'oxygène est préadsorbé sur les particules de carbone ou si les suies contiennent un oxyde capable de fournir de l'oxygène dans leur structure interne, tel que de la cérine CeO₂ ou un mélange cérine-zircone CeO₂-ZrO₂. Dans ces conditions, la création d'intermédiaires réactionnels du type R-C(O adsorbé), qui est la première étape de l'oxydation des suies par le NO₂, peut être effectuée en partie sans intervention du NO₂, donc en s'affranchissant partiellement des limitations diffusionnelles du NO₂ à basse température. On obtient alors un intermédiaire du type R-C(O adsorbé)-M, qui réagit ensuite avec le NO₂ selon

R - C (O adsorbé) - M + NO₂ → R - C (ONO₂) + M

Puis les complexes carbo-nitriques obtenus sont décomposés en CO, CO₂, carbone et NO, l'oxyde métallique jouant un rôle de catalyseur permettant d'abaisser de 50°C la température de cette décomposition.

Pour mettre en oeuvre ce procédé, on a imaginé d'imprégner le filtre à particules par un composé d'une formulation typique d'un « piège à NOₓ » (généralement du type BaCO₃, K₂CO₃...) contenant également un matériau à fort pourvoir de restitution de l'oxygène en milieu riche (dit « composé OSC »). Un tel procédé est décrit par exemple dans le document EP-A-1 148 227.

En phase de fonctionnement « pauvre » du moteur, (rapport air/carburant supérieur au rapport stoechiométrique) les particules carbonées accessibles des suies adsorbent de l'oxygène à leur surface, par action du NO₂ (en dessous de 300°C) et de l'oxygène (au-delà de 300°C). En dessous de 300°C, les NOₓ émis par le moteur contiennent une fraction non négligeable de NO₂. De plus, la présence de platine dans les pièges à NOₓ permet également de convertir du NO en NO₂. Les NOₓ non utilisés sont piégés dans la structure interne du matériau de stockage des NOₓ sous forme de nitrates Ba(NO₃)₂, KNO₃...

En phase de fonctionnement « riche » du moteur (rapport air/carburant inférieur au rapport stoechiométrique), les nitrates se décomposent pour donner lieu à des oxydes ou carbonates et à du NO gazeux, ce qui régénère le piège à NOₓ en quelques secondes. Au contact du platine et/ou de matériaux OSC (CeZrOₓ par exemple) présents dans le piège à NOₓ, le NO est partiellement converti en NO₂, dont la restitution locale au niveau de la surface du filtre et à proximité des suies est favorable à l'augmentation de la cinétique d'oxydation des particules lorsque la température est supérieure à 270-300°C.

Ainsi, dans les procédés qui viennent d'être décrits, l'oxydation des suies est réalisée :
- soit par l'oxygène issu de la phase gazeuse ou d'un contact interne ou externe avec un oxyde métallique: cérine, matériau OSC, résidus d'additifs... ;
- soit par NO₂ en phase gazeuse.

Le but de l'invention est de proposer un autre mode d'action pour l'oxydation des suies, pouvant se substituer ou s'ajouter aux modes d'action précédemment décrits, pour améliorer l'efficacité de la combustion des suies lors de la régénération des filtres à particules.

A cet effet, l'invention a pour objet un procédé de dépollution des émissions d'un moteur à combustion interne, dont la ligne d'échappement est équipée d'un filtre à particules que l'on régénère périodiquement par combustion des particules de suies qui s'y déposent, caractérisé en ce qu'on ajoute au carburant alimentant ledit moteur un additif de type piège à NOₓ de manière à ce que ledit additif se trouve piégé au sein desdites suies, et en ce qu'au moment des régénérations du filtre à particules, on pilote le moteur en balance de richesse selon au moins une alternance d'une phase en mélange pauvre et d'une phase en mélange riche, de manière à faire adsorber le NO₂ des gaz d'échappement par ledit additif lors de la ou des phases en mélange pauvre et à faire oxyder les particules de suies par le NO₂ adsorbé lors de la ou des phases en mélange riche.

Ledit additif peut comporter un matériau se transformant en nitrate lors des phases de mélange pauvre.

Ledit matériau peut être choisi parmi K₂CO₃, BaCO₃, des matériaux se transformant en K₂CO₃ ou BaCO₃ lors de la combustion du carburant, et un mélange de ces composés.

Ledit additif peut comporter un matériau à forte capacité de restitution de l'oxygène.

Ledit matériau à forte capacité de restitution de l'oxygène peut être choisi parmi un mélange de cérine et de zircone et le platine, ou un mélange de ces composés.

Ledit additif peut être un mélange de K₂CO₃, de cérine et de zircone.

La concentration d'additif de type piège à NOₓ dans le carburant est de préférence inférieure à 10 ppm en masse.

Lors des régénérations du filtre à particules, les phases en mélange pauvre durent de préférence de 30 à 300s et les phases en mélange riche durent de préférence de 3 à 30s.

Ledit moteur est de préférence un moteur diesel.

L'invention a également pour objet un dispositif de dépollution des gaz d'échappement issus d'un moteur à combustion interne alimenté en carburant à partir d'un réservoir, du type comportant sur la ligne d'échappement un filtre à particules recueillant les particules de suies renfermées par lesdits gaz, caractérisé en ce qu'il comporte un réservoir renfermant un additif de type piège à NOₓ, des moyens pour ajouter ledit additif au carburant renfermé dans le réservoir, et des moyens pour piloter le fonctionnement dudit moteur selon une alternance de phases en mélange pauvre et de phases en mélange riche lors des étapes de régénération du filtre à particules.

Ledit filtre à particules peut comporter à sa sortie une portion imprégnée par un matériau de type piège à NOₓ.

La ligne d'échappement peut comporter au moins un réacteur renfermant un catalyseur d'oxydation en amont du filtre à particules.

Le dispositif comporte de préférence des moyens pour commander les moyens d'ajout de l'additif au carburant lors du remplissage du réservoir de carburant, en fonction de la quantité de carburant ajoutée.

Comme on l'aura compris, l'invention repose sur la présence dans le carburant d'un additif supplémentaire, dont la composition permet de disposer, au sein même des suies, de faibles quantités de matériaux typiques des pièges à NOₓ. On peut ainsi amener de faibles quantités de NO₂ au sein même de la structure interne des particules formant les agrégats de suies, ce qui va faciliter considérablement l'oxydation des suies à basse température. Ces composés sont typiquement des composés de métaux alcalins ou alcalino-terreux : potassium, baryum notamment, miscibles dans le carburant, par exemple le carbonate de potassium (K₂CO₃) ou de baryum (BaCO₃). Au lieu d'ajouter directement ces carbonates au carburant, on peut utiliser comme additif un ou des composés qui, lors de la combustion du carburant, vont se transformer en carbonates, par exemple l'octoate de potassium ou l'octoate de baryum.

Comme explicité plus haut, le NO₂ est un super-oxydant des suies du fait qu'il est un promoteur de l'adsorption d'oxygène sur les particules de carbone accessibles des suies dès la température ambiante.

Dans le cadre de l'application au post-traitement des gaz d'échappement, ce sont les liquides adsorbés et leur évaporation lors des montées en température qui limitent la diffusion du NO₂ à la surface des suies pour les oxyder.

En disposant d'un matériau capable de produire du NO₂ dans la structure interne même des suies, les barrières de diffusion qui limitent son action à basse température se trouvent ainsi écartées.

Comme également explicité plus haut, les matériaux de type « piège-à-NOₓ » (K₂CO₃, BaCO₃,...) se transforment en nitrates, stables en milieu pauvre. Des expériences montrent que les nitrates n'apportent aucun avantage sur la catalyse des suies Diesel à basse température, notamment lorsque l'atmosphère des gaz d'échappement Diesel reste pauvre en continu.

Pour que l'additif soit actif au sein des suies Diesel, il faut que l'atmosphère des gaz d'échappement soit pilotée en balance de richesse par le contrôle moteur, afin d'autoriser pendant les phases de fonctionnement riche la décomposition des nitrates contenus en périphérie et dans la structure interne des suies. La périodicité des balances de richesse peut être de l'ordre de 60s en fonctionnement pauvre et 6s en fonctionnement riche par exemple.

La décomposition des nitrates issus de l'additif donne lieu à l'émission de NO, essentiellement, en milieu riche. Pour oxyder ce NO et le transformer en NO₂ au sein de la suie, il est préférable que l'additif comporte également un matériau à forte capacité de restitution d'oxygène (dit OSC) tel que de la cérine-zircone (CeZrOₓ) par exemple ou du platine.

L'additif peut également être composé uniquement d'une phase organométallique capable de produire une fine dispersion d'un oxyde de type cérine/zircone (CeZrOₓ), dont les propriétés lui permettent de se comporter comme un matériau piège à NOₓ, avec un avantage supplémentaire sur la combustion des suies lié à sa plus faible vitesse de décomposition des nitrates en milieu riche.

Il est préféré cependant une composition mixte de matériaux piège à NOₓ à base de potassium (K₂CO₃) et de Cérine/Zircone (CeZrOₓ), du fait des propriétés connues du potassium sur la catalyse des hydrocarbures à basse température, utile également à l'assèchement des particules diesel (le potassium aide à réduire la Fraction Organique Soluble pour permettre une meilleure diffusion des gaz oxydants dans le lit de suies).

Pour que toutes les suies se retrouvent avec un additif actif en leur sein, il est nécessaire que l'additif soit présent dans la totalité du carburant. A cet effet, l'additif est ajouté au carburant à chaque remplissage du réservoir de façon à maintenir une concentration en additif en permanence suffisante dans le carburant.

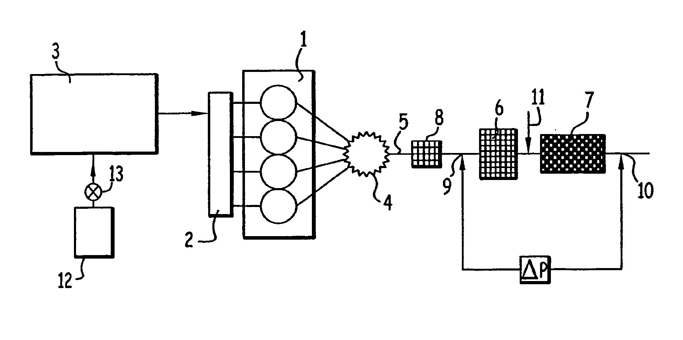

L'invention sera mieux comprise à la lecture de la description qui suit, donnée en référence à la figure unique annexée, qui schématise un moteur diesel et sa ligne d'échappement, équipés pour la mise en oeuvre du procédé selon l'invention.

De manière classique, le moteur diesel 1 est alimenté en gazole par un système d'injection 2 qui prélève le gazole dans un réservoir 3. Le moteur 1 comporte également, dans l'exemple représenté, un turbo-compresseur 4 entraîné par les gaz d'échappement qui circulent dans la ligne d'échappement 5. La ligne d'échappement 5 est équipée d'un réacteur 6 renfermant un catalyseur d'oxydation et d'un filtre à particules catalysé 7, par exemple du type en céramique à nid d'abeilles connu en lui-même. Optionnellement, un précatalyseur d'oxydation 8 précède le catalyseur d'oxydation proprement dit 6. La ligne d'échappement est également équipée de capteurs de température et de pression permettant de gérer son fonctionnement. En particulier, des capteurs de pression 9, 10 permettent de mesurer la différence de pression entre l'entrée du catalyseur d'oxydation 6 et la sortie du filtre à particules 7. Une différence de pression relativement importante est le signe que le filtre à particules 7 est encrassé et qu'une opération de régénération doit être déclenchée. Un capteur de température 11 permet de déterminer la température des gaz en amont du filtre à particules 7.

Selon l'invention, l'installation comporte également un réservoir à additif 12 renfermant un additif pouvant jouer le rôle d'un piège à NOₓ (ou un composé se transformant en un tel additif lors de la combustion du carburant), et une pompe 13 permettant d'ajouter à la commande cet additif au gazole contenu dans le réservoir 3, de manière à ce que cet additif se retrouve incorporé au sein des particules de suies émises par le moteur 1 et qui sont piégées à l'intérieur du filtre à particules 7.

Les fonctions des différents organes peuvent être résumées comme suit.

Le catalyseur d'oxydation 6 actif à basse température (140/150°C) a pour rôle :
- lorsque le moteur fonctionne en mélange pauvre :
   - de convertir les émissions de CO et d'hydrocarbures du moteur en CO₂,
   - de réduire le plus possible la Fraction Organique Soluble agglomérée aux particules (hydrocarbures, eau, sulfates...),
   - d'oxyder les émissions de NO en NO₂.
- lorsque le moteur fonctionne en mélange riche, de réduire la teneur en oxygène des gaz d'échappement en oxydant les fortes émissions d'hydrocarbures émises par le moteur.

Le filtre à particules 7 monolithique positionné en aval du catalyseur d'oxydation 6 capte les particules de suies émises par le moteur 1. Les parois de sortie des gaz d'échappement sont imprégnées par une formulation permettant la réduction des NOₓ par le CO en milieu riche (type : Rh/alumine ou CeZrOₓ).

Le système d'additivation du gazole 12, 13 permet d'introduire de faibles quantités d'additif liquide dit « piège à NOₓ» dans le réservoir de carburant 3. Cet additif est sous une forme miscible dans le gazole.

La composition chimique de l'additif est définie pour que soient présentes ou se forment dans la chambre de combustion du moteur 1 de faibles quantités d'un matériau capable d'adsorber des NOₓ en phase pauvre et de les restituer sous forme de NO₂ dans la structure interne des particules de suies ou dans le lit de suies formé sur les parois poreuses du filtre à particules 7.

Lors du fonctionnement du moteur en mélange pauvre, le ou les catalyseurs d'oxydation 6, 8 placés en amont du filtre à particules 7 convertissent le CO et les hydrocarbures en CO₂, ainsi que les NOₓ en NO₂ ; il(s) contribue(nt) également à la réduction de la Fraction Organique Soluble des particules.

Les particules se chargent d'additif piège à NOₓ dans leur parcours entre la chambre de combustion et le filtre à particules 7 dans lequel elles sont retenues. Le NO₂ formé dans la chambre de combustion du moteur 1 ou issu de la conversion des NOₓ sur les catalyseurs d'oxydation 6, 8 est adsorbé partiellement par l'additif piège à NOₓ contenu dans les suies diesel et sur les particules de carbone accessibles des suies diesel.

Le processus d'adsorption se passe dès la température ambiante au niveau des suies diesel, et au delà de 180/200°C au sein du matériau piège à NOₓ pour former des nitrates stables.

Les NOₓ non adsorbés par l'additif contenu dans les suies diesel sont pris en charge par le résidu d'additif retenu sur le filtre à particules 7 et issu de la combustion des suies (comme décrit ci-après). Après avoir été réduit ou s'être décomposé en phase riche, le résidu d'additif piège à NOₓ a retrouvé une forme d'oxyde ou de carbonate réutilisable en phase pauvre pour adsorber des NOₓ.

Le résidu d'additif, gênant pour d'autres applications lorsqu'il est uniquement utilisé pour oxyder les suies diesel, est alors utile à la catalyse complémentaire des gaz d'échappement, notamment pour le post-traitement des NOₓ.

La capacité de stockage des NOₓ du résidu d'additif devient alors croissante au fur et à mesure qu'il s'accumule dans le filtre à particules 7. Ceci est un avantage pour le maintien durable du potentiel d'efficacité du post-traitement des NOₓ de ce type de catalyseur très sensible à l'empoisonnement au soufre et aux excursions thermiques à haute température (700°C et davantage).

L'apport d'additif par la consommation de carburant permet de régénérer la fonction catalyse de l'élimination des NOₓ en continu et de la maintenir efficace pendant toute la durée de fonctionnement du moteur sans perte de performance.

Lors du fonctionnement du moteur en mélange riche, les catalyseurs convertissent les fortes émissions de CO et d'hydrocarbures issues de la dégradation du processus de combustion pour faire fonctionner le moteur 1 légèrement au dessous du rapport stoechiométrique air/carburant.

Les conditions d'atmosphère riche sont alors réunies pour que les nitrates formés au sein des suies diesel se décomposent et donnent lieu à du NO. La formulation de l'additif permet alors de convertir le NO formé en NO₂ au sein de la suie, du fait de la présence d'une fonction OSC.

Le passage en mélange riche est conditionné à un niveau de température minimum de 250°C utile à la réaction du NO₂ avec la partie carbonée des suies diesel, afin de les éliminer sous forme de CO.

La réaction chimique globale d'oxydation des suies diesel est la suivante :

C (suies) + NO₂ → CO + NO (1)

Le contrôle moteur tient compte de la température des gaz d'échappement en amont du filtre à particules 7 donnée par le capteur 11 et du niveau d'accumulation de suies dans le filtre à particules 7 donnée par les capteurs 9, 10, avant de déclencher le passage en mélange riche. Si la température est inférieure à 250°C, le contrôle moteur met en oeuvre une post-injection de carburant pour échauffer les gaz d'échappement jusqu'à cette température.

Le NO sortant des suies diesel consommées selon la réaction (1) et le NO issus de la décomposition des nitrates formés au sein du résidu d'additif sont ensuite convertis par l'imprégnation du FAP dans les canaux de sortie. Le NO est réduit par le CO issu de la dégradation de la combustion moteur et de la combustion des suies selon (1). Des sites Rh actif/oxydes peuvent permettre cette réduction à partir de 200 à 250°C selon la réaction suivante :

NO + CO → N₂ + CO₂ (2)

Le système permet de post-traiter les quatre polluants réglementés CO/hydrocarbures/NOₓ et particules de façon efficace et durable du fait de sa faible sensibilité à l'empoisonnement au soufre, la fonction « piège à NOₓ » étant régénérée en continu.

Le système offre une plus grande tolérance vis à vis de l'utilisation de gazole soufré, même si une faible teneur en soufre du gazole reste nécessaire pour obtenir une fonction d'oxydation durable dans les catalyseurs d'oxydation 6, 8.

Le fait de séparer les fonctions d'oxydation du CO et des hydrocarbures de celles du post-traitement des NOₓ et des particules permet de garder la possibilité de disposer de deux supports dans le filtre à particules 7, le premier à faible inertie thermique pour pouvoir le mettre rapidement en chauffe après un démarrage à froid, le deuxième à forte inertie thermique favorable à la combustion des suies diesel.

La catalyse du filtre à particules 7 pour le post-traitement des NOₓ dans ses canaux de sortie permet de s'affranchir des effets d'encrassement de la phase catalytique par les résidus d'additif ou les résidus issus de la combustion des additifs de l'huile de lubrification ou du gazole (Ca(OH)₂, MgO/Mg(OH)₂, phosphates,...).

Le piège à NOₓ offre une meilleure durabilité de la fonction de réduction des NOₓ du fait que sa formulation peut être du type développé en catalyse trois voies des moteurs à essence, donc stable thermiquement au delà de 1000°C. Son positionnement sur les canaux de sortie du filtre à particules 7 ne risque pas de nuire au maintien de sa durabilité, même lors de régénérations du filtre à particules 7 incontrôlée.

Pour que les suies se retrouvent avec en leur sein une concentration efficace d'additif piège à NOₓ, il faut que cet additif soit présent dans le carburant en permanence à une concentration suffisante, de l'ordre de 10ppm en masse. Cependant cette concentration ne doit pas être trop élevée pour ne pas provoquer une accumulation excessive de résidus dans le filtre à particules 7, qui impliquerait un nettoyage trop fréquent de celui-ci. A cet effet, il est conseillé (comme il est déjà connu pour l'ajout d'autres additifs au carburant) de faire piloter la pompe d'injection 13 par un calculateur qui commande l'ajout d'additif à partir du réservoir 12 au moment de chaque remplissage du réservoir de carburant 3. Cet ajout d'additif est modulé en fonction de la quantité de carburant ajoutée, déterminée à l'aide d'une jauge, de manière à maintenir dans le carburant la concentration d'additif désirée. Le réservoir d'additif 12 est rempli par le garagiste, par exemple lors des opérations de nettoyage du filtre à particules 7 qui ont lieu en général tous les 80.000 à 120.000 km.

Par rapport à des suies non additivées ou additivées simplement par du cérium pour abaisser leur température de combustion, l'invention permet d'une part d'abaisser sensiblement la température à laquelle la combustion des suies peut démarrer (vers 250°C), et d'autre part d'accélérer cette combustion.

Ainsi, des suies additivées par un mélange cérine-zircone et un matériau de type K₂CO₃ ou BaCO₃ brûlent à 300°C dans les conditions de l'invention, c'est à dire avec un moteur fonctionnant en balance de richesse, à une vitesse deux fois supérieure à celle de la combustion des suies additivées de cérium en régime pauvre à 400°C et huit fois supérieure à celle de la combustion de suies non additivées en régime pauvre.

Il doit être entendu que, l'imprégnation de la sortie du filtre à particules 7 par une formulation permettant le piégeage des NOₓ n'est pas obligatoire. Mais elle est conseillée pour assurer le respect des normes sur le rejet des NOₓ. De même, la présence des catalyseurs d'oxydation 6, 8 n'est pas non plus strictement obligatoire, mais seulement très conseillée pour réduire les émissions d'hydrocarbures et de CO, et aussi, comme on l'a vu, former du NO₂ qui va contribuer à l'oxydation des suies.

L'invention a été décrite dans le cadre de son application à la dépollution des émissions d'un moteur diesel. Mais elle est applicable à la dépollution des émissions d'autres types de moteurs à combustion interne pour lesquels se poserait le problème de l'élimination périodique des suies accumulées dans un filtre à particules.

## Revendications

1. Procédé de régénération périodique d'un filtre à particules (7) dans la ligne d'échappement (5) d'un moteur à combustion intense (1) par combustion des particules de suies qui s'y déposent, **caractérisé en ce qu'**on ajoute au carburant alimentant ledit moteur (1) un additif de type piège a NOₓ à une concentration maximale de 10 ppm de manière à ce que ledit additif se trouve piégé au sein desdites suies, et **en ce qu'**au moment des régénérations du filtre à particules (7), on pilote le moteur (1) en balance de richesse selon au moins une alternance d'une phase en mélange pauvre et d'une phase en mélange riche, de manière à faire adsorber le NO₂ des gaz d'échappement par ledit additif lors de la ou des phases en mélange pauvre et à faire oxyder les particules de suies par le NO₂ adsorbé lors de la ou des phases en mélange riche.

2. Procédé selon la revendication 1, **caractérisé en ce que** ledit additif comporte un matériau se transformant en nitrate lors des phases de mélange pauvre.

3. Procédé selon la revendication 2, **caractérisé en ce que** ledit matériau est choisi parmi K₂CO₃, BaCO₃, des matériaux se transformant en K₂CO₃ ou BaCO₃ lors de la combustion du carburant, et un mélange de ces composés.

4. Procédé selon l'une des revendications 1 à 3, **caractérisé en ce que** ledit additif comporte un matériau à forte capacité de restitution de l'oxygène.

5. Procédé selon la revendication 4, **caractérisé en ce que** ledit matériau à forte capacité de restitution de l'oxygène est choisi parmi un mélange de cérine et de zircone et le platine, ou un mélange de ces composés.

6. Procédé selon les revendications 3 et 5 prises ensemble, **caractérisé en ce que** ledit additif est un mélange de K₂CO₃, de cérine et de zircone. 10

7. Procédé selon l'une des revendications 1 à 6, **caractérisé en ce que** lors des régénérations du filtre à particules, les phases en mélange pauvre durent de 30s à 300s et les phases en mélange riche durent de 3s à 30s.

8. Procédé selon l'une des revendications 1 à 7, **caractérisé en ce que** ledit moteur (1) est un moteur diesel.

9. Dispositif de dépollution des gaz d'échappement issus d'un moteur à combustion interne (1) alimenté en carburant à partir d'un réservoir (3), du type comportant sur la ligne d'échappement (5) un filtre à particules (7) recueillant les particules de suies renfermées par lesdits gaz, **caractérisé en ce qu**'il comporte un réservoir 12 renfermant un additif de type piège à NOₓ, des moyens (13) pour ajouter ledit additif au carburant renfermé dans le réservoir (3), et des moyens pour piloter le fonctionnement dudit moteur (1) selon une alternance de phases en mélange pauvre et de phases en mélange riche lors des étapes de régénération du filtre à particules (7).

10. Dispositif selon la revendication 9, **caractérisé en ce que** ledit filtre à particules (7) comporte à sa sortie une portion imprégnée par un matériau de type piège à NOₓ.

11. Dispositif selon la revendication 9 ou 10, **caractérisé en ce que** la ligne d'échappement comporte au moins un réacteur (5, 6) renfermant un catalyseur d'oxydation en amont du filtre à particules (7).

12. Dispositif selon l'une des revendications 9 à 11, **caractérisé en ce qu**'il comporte des moyens pour commander les moyens (13) d'ajout de l'additif au carburant lors du remplissage du réservoir (3) de carburant, en fonction de la quantité de carburant ajoutée.

## Claims

1. Method of periodic regeneration of a particle filter (7) in the exhaust line (5) of an internal combustion engine (1) by combustion of the soot particles that are deposited therein, **characterised in that** to the fuel supplied to said engine (1) there is added an NOₓ trap type additive at a maximum concentration of 10 ppm so that said additive is trapped within said soot and **in that**, during particle filter (7) regenerations, the engine (1) is controlled in terms of richness balance to provide at least one alternation between a lean-mixture phase and a rich-mixture phase so as to cause the NO₂ to be adsorbed from the exhaust gases by said additive during the lean-mixture phase(s) and to cause the soot particles to be oxidised by the adsorbed NO₂ during the rich-mixture phase(s).

2. Method according to claim 1, **characterised in that** said additive comprises a material which is converted to nitrate during the lean-mixture phases.

3. Method according to claim 2, **characterised in that** said material is selected from K₂CO₃, BaCO₃, materials which are converted into K₂CO₃ or BaCO₃ during combustion of the fuel, and a mixture of those compounds.

4. Method according to one of claims 1 to 3, **characterised in that** said additive comprises a material having a high oxygen release capacity.

5. Method according to claim 4, **characterised in that** said material having a high oxygen release capacity is selected from a ceria and zirconia mixture and platinum, or a mixture of those compounds.

6. Method according to claims 3 and 5 in combination, **characterised in that** said additive is a mixture of K₂CO₃, ceria and zirconia.

7. Process according to one of claims 1 to 6, **characterised in that**, during particle filter regenerations, the lean-mixture phases last from 30 s to 300 s and the rich-mixture phases last from 3 s to 30 s.

8. Method according to one of claims 1 to 7, **characterised in that** said engine (1) is a diesel engine.

9. Device for depollution of exhaust gases that have come from an internal combustion engine (1) which is supplied with fuel from a tank (3), of the type comprising, in the exhaust line (5), a particle filter (7) which collects the soot particles contained in said gases, **characterised in that** it comprises a tank 12 containing an NOₓ trap type additive, means (13) for adding said additive to the fuel contained in the tank (3) and means for controlling operation of said engine (1) to provide an alternation between lean-mixture phases and rich-mixture phases during the particle filter (7) regeneration stages.

10. Device according to claim 9, **characterised in that** said particle filter (7) comprises, at its outlet, a portion impregnated with an NOₓ trap type material.

11. Device according to claim 9 or 10, **characterised in that** the exhaust line comprises at least one reactor (5, 6) containing an oxidation catalyst, upstream of the particle filter (7).

12. Device according to one of claims 9 to 11, **characterised in that** it comprises means for controlling the means (13) for adding the additive to the fuel during filling of the tank (3) with fuel, as a function of the amount of fuel added.

## Patentansprüche

1. Verfahren zur periodischen Regeneration eines Partikelfilters (7) in einer Auspuffleitung (5) eines Verbrennungsmotors (1) durch Verbrennen der sich darauf absetzenden Rußpartikel, **dadurch gekennzeichnet, dass** dem Treibstoff, der dem Motor (1) zugeführt wird, ein Additiv vom NOₓ-Fangstoff-Typ mit einer maximalen Konzentration von 10 ppm derart zugesetzt wird, dass sich das Additiv gefangen im Innern des Rußes befindet, und dass zum Zeitpunkt der Regeneration des Partikelfilters (7) der Motor (1) im Reichhaltigkeits-Gleichgewicht gemäß wenigstens einer Wechselfolge einer Phase mit armem Gemisch und einer Phase mit reichem Gemisch gesteuert wird, so dass das NO₂ der Auspuffgase während der Phase(n) mit armem Gemisch durch das Additiv adsorbiert wird, und die Rußpartikel während der Phase(n) mit reichem Gemisch durch das adsorbierte NO₂ oxidiert werden.

2. Verfahren gemäß Anspruch 1, **dadurch gekennzeichnet, dass** das Additiv einen Stoff enthält, der sich während der Phasen mit armem Gemisch in ein Nitrat umwandelt.

3. Verfahren gemäß Anspruch 2, **dadurch gekennzeichnet, dass** der Stoff aus K₂CO₃, BaCO₃, Stoffen, die sich während der Verbrennung des Treibstoffs in K₂CO₃ oder BaCO₃ umwandeln, und Mischungen dieser Verbindungen ausgewählt ist.

4. Verfahren gemäß einem der Ansprüche 1 bis 3, **dadurch gekennzeichnet, dass** das Additiv einen Stoff mit starker Sauerstoff-Restitutionsfähigkeit enthält.

5. Verfahren gemäß Anspruch 4, **dadurch gekennzeichnet, dass** der Stoff mit starker Sauerstoff-Restitutionsfähigkeit aus einer Cerin-Zirkon-Mischung und Platin oder einer Mischung dieser Verbindungen ausgewählt ist.

6. Verfahren gemäß beider Ansprüche 3 und 5, **dadurch gekennzeichnet, dass** das Additiv eine Mischung aus K₂CO₃, Cerin und Zirkon ist.

7. Verfahren gemäß einem der Ansprüche 1 bis 6, **dadurch gekennzeichnet, dass** bei der Regeneration des Partikelfilters die Phasen mit armem Gemisch 30 s bis 300 s und die Phasen mit reichem Gemisch 3 s bis 30 s andauern.

8. Verfahren gemäß einem der Ansprüche 1 bis 7, **dadurch gekennzeichnet, dass** der Motor (1) ein Dieselmotor ist.

9. Vorrichtung zur Reinigung von Abgasen, die von einem Verbrennungsmotor (1) stammen, der mit Treibstoff aus einem Tank (3) gespeist wird, wobei die Auspuffleitung (5) einen Partikelfilter (7) aufweist, der die in den Gasen enthaltenen Rußpartikel auffängt, **dadurch gekennzeichnet, dass** er einen Tank (12), der ein Additiv vom NOₓ-Fangstoff-Typ enthält, Mittel (13) zum Zuführen des Additivs zu dem in dem Tank (3) enthaltenen Treibstoff und Mittel zum Steuern des Betriebs des Motors (1) gemäß einer Wechselfolge von Phasen mit armem Gemisch und Phasen mit reichem Gemisch während der Regenerationsstufen des Partikelfilters (7) aufweist.

10. Vorrichtung gemäß Anspruch 9, **dadurch gekennzeichnet, dass** der Partikelfilter (7) an seinem Ausgang einen Bereich aufweist, der mit einem Stoff vom NOₓ-Fangstoff-Typ imprägniert ist.

11. Vorrichtung gemäß Anspruch 9 oder 10, **dadurch gekennzeichnet, dass** die Auspuffleitung oberhalb des Partikelfilters (7) wenigstens einen Reaktor (5, 6) aufweist, der einen Oxidationskatalysator enthält.

12. Vorrichtung gemäß einem der Ansprüche 9 bis 11, **dadurch gekennzeichnet, dass** sie Mittel zum Steuern der Mittel (13) zur Zuführung des Additivs zu dem Treibstoff während des Auffüllens des Treibstofftanks (3) in Abhängigkeit der zugeführten Treibstoffmenge aufweist.
